# FASCICULE DE BREVET EUROPEEN

(11) **EP 4 002 212 B1**
(45) Date de publication et mention de la délivrance du brevet: **13.09.2023**
(21) Numéro de dépôt: 21209456.9
(22) Date de dépôt: 22.11.2021
(51) Int. Cl.: G06K 19/077, G06K 19/07, H05B 45/30

(54) **CARTE À MICROCIRCUIT**
MIKROSCHALTKREIS-KARTE
MICROCIRCUIT BOARD

(30) Priorité: 23.11.2020 FR 2012008
(43) Date de publication de la demande: 25.05.2022
(73) Titulaire: STMicroelectronics (Rousset) SAS, 13790 Rousset (FR)
(72) Inventeur: ROUY, Olivier, 13790 PEYNIER (FR)
(74) Mandataire: Cabinet Beaumont

(56) Documents cités:
- EP-A1- 3 104 669
- US-A1- 2019 244 210
- US-B1- 9 230 255

## Description

### Domaine technique

La présente description concerne de façon générale les dispositifs électroniques et, plus particulièrement, les cartes à microcircuit ("smart card" en anglais).

### Technique antérieure

De nombreuses applications font usage de cartes à microcircuit, par exemple des cartes de paiement, des cartes de transport, des cartes d'identification personnelle, etc. Parmi les cartes à microcircuit actuelles, on connaît notamment des cartes équipées d'un capteur biométrique. Le capteur biométrique permet typiquement d'effectuer des vérifications d'identité, par exemple lors de chaque utilisation de la carte. Certaines cartes à microcircuit sont équipées de diodes électroluminescentes, comme cela est par exemple décrit dans le document EP 3 104 669 A1.

### Résumé de l'invention

Il existe un besoin pour une carte à microcircuit palliant tout ou partie des inconvénients des cartes à microcircuit connues.

Par exemple, il existe un besoin pour une carte à microcircuit comprenant une diode électroluminescente ("Light Emitting Diode" ou LED en anglais), dans laquelle la consommation électrique de la LED est maîtrisée.

Un mode de réalisation pallie tout ou partie des inconvénients des cartes à microcircuit connues.

Par exemple, un mode de réalisation prévoit une carte à microcircuit comprenant une LED, dans laquelle la consommation de la LED est maîtrisée.

Un mode de réalisation prévoit une carte à microcircuit comprenant :
une diode électroluminescente ayant une borne d'anode reliée à un noeud d'application d'une tension d'alimentation par un premier transistor, et une borne de cathode reliée à un noeud d'application d'une tension de référence par un deuxième transistor ; et
un microcontrôleur comprenant un convertisseur numérique-analogique et un comparateur ayant une première entrée reliée à une des bornes d'anode et de cathode de la diode et une deuxième entrée configurée pour recevoir une tension de sortie du convertisseur,
dans laquelle un signal de sortie du comparateur commande l'un des premier et deuxième transistors pour couper l'alimentation de la diode électroluminescente lorsqu'un courant qui y circule atteint un courant maximal désiré dans ladite diode électroluminescente.

Selon un mode de réalisation, la première entrée du comparateur est reliée à la borne d'anode de la diode, le comparateur étant configuré pour ouvrir ledit un des premier et deuxième transistors lorsqu'une tension d'anode de la diode est inférieure à la tension de sortie du convertisseur.

Selon un mode de réalisation, la première entrée du comparateur est reliée à la borne de cathode de la diode, le comparateur étant configuré pour ouvrir ledit un des premier et deuxième transistors lorsqu'une tension de cathode de la diode est supérieure à la tension de sortie du convertisseur.

Selon un mode de réalisation, le microcontrôleur est configuré pour commander l'autre desdits premier et deuxième transistors.

Selon un mode de réalisation, le microcontrôleur est configuré pour mettre l'autre desdits premier et deuxième transistors à l'état passant pendant une phase d'émission d'impulsions lumineuses par la diode.

Selon un mode de réalisation, ledit un des premier et deuxième transistors appartient à une sortie du microcontrôleur, par exemple de type sortie trois états.

Selon un mode de réalisation :
le signal de sortie du comparateur commande le premier transistor, l'état passant du premier transistor étant configuré pour tirer ladite sortie à la tension du premier noeud, ou
le signal de sortie du comparateur commande le deuxième transistor, l'état passant du deuxième transistor étant configuré pour tirer ladite sortie à la tension du deuxième noeud.

Selon un mode de réalisation, l'autre des premier et deuxième transistors appartient à une autre sortie du microcontrôleur, par exemple de type sortie trois états.

Selon un mode de réalisation :
le signal de sortie du comparateur commande le premier transistor, l'état passant du premier transistor étant configuré pour tirer ladite sortie à la tension du premier noeud et l'état passant du deuxième transistor étant configuré pour tirer ladite autre sortie à la tension du deuxième noeud, ou
le signal de sortie du comparateur commande le deuxième transistor, l'état passant du deuxième transistor étant configuré pour tirer ladite sortie à la tension du deuxième noeud et l'état passant du premier transistor étant configuré pour tirer ladite autre sortie à la tension du premier noeud.

Selon un mode de réalisation, la carte à microcircuit comprend en outre un capteur biométrique relié au microcontrôleur.

Selon un mode de réalisation, le capteur biométrique est un capteur d'empreinte digitale.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière très schématique et sous la forme de blocs, un exemple de carte à microcircuit du type auquel s'appliquent les modes de réalisation décrits ;
la figure 2 représente un exemple de circuit électronique à LED ;
la figure 3 illustre par des courbes le fonctionnement du circuit de la figure 2 ;
la figure 4 représente, de manière schématique, un mode de réalisation d'une carte à microcircuit comprenant une LED ;
la figure 5 illustre par des courbes le fonctionnement de la carte à microcircuit de la figure 4 ;
la figure 6 représente, de manière schématique, une variante de réalisation de la carte à microcircuits de la figure 4 ; et
la figure 7 représente, de manière schématique, une autre variante de réalisation de la carte à microcircuit de la figure 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les fonctionnalités usuelles d'une carte à microcircuit, comme par exemple la communication avec un lecteur de carte et la fourniture d'une puissance d'alimentation à la carte par un lecteur de carte, n'ont pas été décrites, les modes de réalisation décrits étant compatibles avec les fonctionnalités usuelles d'une carte à microcircuit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

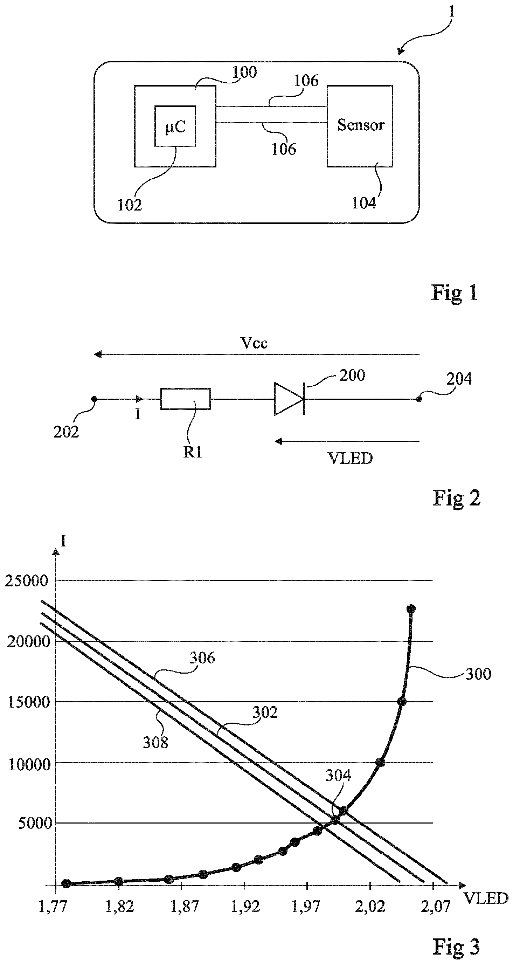

La figure 1 représente, de manière très schématique et sous la forme de blocs, un exemple d'une carte à microcircuit 1 du type auquel s'appliquent les modes de réalisation décrits.

La carte 1 comprend un circuit 100, comportant un microcontrôleur 102 (bloc "pC"). Le microcontrôleur 102 est par exemple configuré pour commander un ou plusieurs modules de communication et/ou d'alimentation (non représentés) du circuit 100. Le ou les modules du circuit 100 permettent, par exemple :
- de retro-moduler un champ électromagnétique émis par un lecteur de carte et reçu par la carte 1, afin de transmettre des données au lecteur ; et/ou
- de démoduler un champ électromagnétique émis par un lecteur et reçu par la carte 1, afin de recevoir des données du lecteur ; et/ou
- d'échanger des données avec un lecteur de carte par l'intermédiaire de signaux électriques transmis entre le lecteur et la carte 1 via au moins un contact électrique entre le lecteur et la carte 1 ; et/ou
- de générer une tension d'alimentation pour des circuits de la carte 1, à partir d'une puissance d'alimentation électrique reçue d'un lecteur de carte, soit par contact électrique avec le lecteur, soit par l'intermédiaire d'un champ électromagnétique émis par le lecteur. Par exemple, le circuit 100 comprend un module d'alimentation configuré pour générer une tension d'alimentation Vcc (non visible en figure 1) du microcontrôleur 102, à partir d'une puissance d'alimentation électrique reçue.

De préférence, le circuit 100, par exemple son microcontrôleur 102, comprend un élément sécurisé (non représenté) dans lequel sont stockées des données d'identification du détenteur de la carte 1.

Le circuit 100, par exemple son microcontrôleur 102, comprend des bornes d'entrée et/ou de sortie permettant de recevoir ou de fournir des signaux électriques à d'autres éléments de la carte 1.

Dans l'exemple de la figure 1, la carte 1 est une carte biométrique. La carte 1 comprend alors un capteur 104 (bloc "Sensor"). De préférence, le capteur 104 est un capteur d'empreinte digitale. Toutefois, les modes de réalisation qui vont être décrits s'appliquent également au cas d'une carte à microcircuit ne comprenant pas de capteur biométrique.

Le circuit 100, par exemple son microcontrôleur 102, est configuré pour échanger des données avec le capteur 104. Dans l'exemple de la figure 1, des conducteurs électriques 106 connectent le circuit 100, par exemple des bornes d'entrée et/ou de sortie du microcontrôleur 102, à des bornes d'entrée et/ou de sortie du capteur 104.

Il serait souhaitable que la carte 1 comprenne une LED qui soit commandée par le circuit 100, et, plus particulièrement, par le microcontrôleur 102 de ce circuit 100. Une telle LED permettrait, par exemple, d'indiquer à quelle étape on se trouve dans une suite d'étapes d'une opération d'enregistrement ("enrollment" en anglais) et/ou d'afficher le résultat d'une opération mise en œuvre avec la carte 1, comme par exemple un paiement, une identification d'un utilisateur, éventuellement au moyen de paramètres biométriques de cet utilisateur, ou une phase d'enregistrement.

La figure 2 représente un exemple de circuit 2 électronique à LED.

Ce circuit 2 comprend au moins une résistance R1 en série avec une LED 200, entre un noeud 202 et un noeud 204. L'anode de la LED 200 est reliée au noeud 202 et la cathode de la LED 200 est reliée au noeud 204. Plus particulièrement, dans l'exemple de la figure 2, la résistance R1 relie l'anode de la LED 200 au noeud 202, et la cathode de la LED 200 est connectée au noeud 204.

En fonctionnement, une tension d'alimentation, par exemple la tension d'alimentation Vcc, est appliquée sur le noeud 202. La tension Vcc est par exemple positive et référencée à une tension de référence appliquée sur le noeud 204. Lorsque la tension Vcc est suffisante pour qu'une tension VLED aux bornes de la LED 200, référencée à la cathode de la LED 200, soit supérieure au seuil de mise en conduction de la LED 200, un courant I positif circule du noeud 202 vers le noeud 204 et la LED 200 émet de la lumière.

La figure 3 illustre par des courbes le fonctionnement du circuit de la figure 2.

Une courbe 300 représente l'évolution du courant I (en ordonnée et en µA) dans la LED 200 en fonction de la tension VLED (en abscisse et en V) aux bornes de la LED 200.

Une courbe 302 représente l'évolution du courant I dans le circuit de la figure 2, en fonction de la tension VLED. Plus exactement, pour l'exemple du circuit de la figure 2, la courbe 302 correspond à la fonction I = (Vcc - VLED)/R1.

L'intersection des courbes 300 et 302 correspond au point de fonctionnement 304 du circuit de la figure 2. Dit autrement, lorsque la tension Vcc est appliquée sur le noeud 202, le courant I dans le circuit est alors égal au courant correspondant au point de fonctionnement 304, et la tension VLED est alors égale à la tension VLED du point de fonctionnement 304.

On pourrait penser à utiliser le circuit de la figure 2 dans la carte 1 de la figure 1 pour que la carte 1 comprenne la LED 200. Par exemple, on pourrait penser à relier ou connecter le noeud 202 du circuit de la figure 2 à une borne de sortie du microcontrôleur 102 de la carte 1, et le noeud 204 à une autre borne de sortie du microcontrôleur 102 de la carte 1. Le microcontrôleur 102 serait alors en mesure d'appliquer la tension de référence sur sa sortie reliée au noeud 204, et de commander une émission de lumière par la LED 200 en appliquant la tension Vcc sur sa sortie reliée au noeud 202.

Toutefois, il faudrait alors prévoir la résistance R1 dans la carte 1, ce qui pose des problèmes d'encombrement, et ce qui complexifie la fabrication de la carte 1, notamment s'il est nécessaire de prévoir un micro-circuit imprimé ("micro Printed Circuit Board" ou micro-PCB en anglais) pour la résistance R1. Plus généralement, la prévision de la résistance R1 dans la carte 1 pose des problèmes de fabrication dans le cas où la carte 1 est soumise à de fortes contraintes de coût et de dimensions.

De plus, dans le circuit de la figure 2, pour réduire la consommation de la LED 200 et pour une valeur nominale de la tension Vcc, la valeur de la résistance R1 est déterminée de manière que le point de fonctionnement 304 corresponde à un courant I relativement faible, par exemple de l'ordre de 1 à 2 mA.

Cependant, la tension Vcc peut varier par rapport à sa valeur nominale pour laquelle la valeur de la résistance R1 a été déterminée de manière à obtenir le point de fonctionnement 304 désiré. Par exemple, une augmentation de la tension Vcc par rapport à sa valeur nominale entraîne un décalage de la courbe 302 vers le haut, comme cela est illustré par la courbe 306, et, à l'inverse, une diminution de la tension Vcc par rapport à sa valeur nominale entraîne un décalage de la courbe 302 vers le bas, comme cela est illustré par la courbe 308. Il en résulte une modification du point de fonctionnement 304, donc du courant I et de la consommation de la LED 200. En particulier, quand la courbe 302 se déplace vers la courbe 306, le point de fonctionnement 304 se déplace sur la courbe 300 jusqu'à une zone où le courant I dans la LED 200 augmente de manière exponentielle avec l'augmentation de la tension VLED. Il en résulte alors une consommation excessive de la LED 200, ce qui n'est pas souhaitable.

Pour réduire l'amplitude du décalage de la courbe 302 vers la courbe 306 lorsque la tension Vcc augmente par rapport à sa valeur nominale, on pourrait penser à augmenter la valeur de la résistance R1. Toutefois, pour que le point de fonctionnement 304 ne soit pas modifié, cela implique également d'augmenter la valeur nominale de la tension Vcc, ce qui n'est pas souhaitable, voire peut ne pas être possible dans une carte à microcircuit où la tension Vcc est généralement au maximum de l'ordre de 2,1 V, voire au maximum de l'ordre de 1,8 V.

Il a été constaté que le courant I dans la LED 200 augmente avec la tension VLED d'abord de manière relativement linéaire, par exemple jusqu'au point de fonctionnement 304 illustré en figure 3, puis de manière exponentielle.

Un mode de réalisation propose de surveiller l'évolution de la tension aux bornes d'une LED, de détecter quand le courant dans la LED passe d'une augmentation relativement linéaire avec la tension à ses bornes, à une augmentation exponentielle avec la tension à ses bornes, et de couper l'alimentation de la LED lorsque le courant dans la LED augmente de manière exponentielle avec la tension aux bornes de la LED. En arrêtant l'alimentation de la LED 200 lorsque le courant augmente de manière exponentielle dans la LED, on empêche que la LED consomme trop de puissance électrique. Ainsi, la consommation de la LED, c'est-à-dire la valeur du courant qui circule dans la LED, est maîtrisée. Dit autrement, un mode de réalisation prévoit de surveiller l'évolution de la tension aux bornes de la LED et de couper l'alimentation de la LED lorsque le courant qui y circule atteint un courant maximal désiré dans la LED. A titre d'exemple, le courant dans la LED croît de manière relativement linéaire jusqu'à ce courant maximal, puis de manière relativement exponentielle après ce courant maximal, lorsque la tension VLED aux bornes de la LED augmente, par exemple suite à des fluctuations à la hausse de la tension Vcc par rapport à sa valeur nominale.

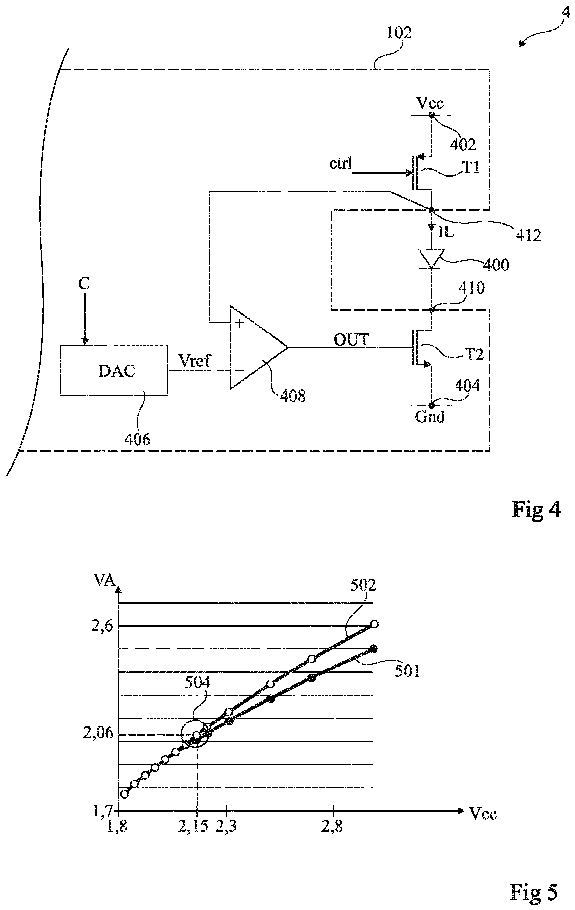

La figure 4 représente, de manière schématique, un mode de réalisation d'une carte à microcircuit 4 comprenant une LED. La carte 4 est par exemple similaire à la carte 1 à la différence qu'elle comprend en outre une LED 400. En figure 4, seule une partie du microcontrôleur 102 et la LED 400 de la carte 4 ont été représentés. La LED 400 est par exemple identique à la LED 200 de la figure 2.

La LED 400 a une borne d'anode reliée à un noeud 402 d'application de la tension Vcc, et une borne de cathode reliée à un noeud 404 d'application d'une tension de référence, typiquement la masse Gnd. La tension Vcc est référencée au noeud 404.

Plus exactement, un transistor MOS (de l'anglais "Métal Oxide Semiconductor" - Métal Oxyde Semiconducteur en français) T1 relie l'anode de la LED 400 au noeud 402, et un transistor MOS T2 relie la cathode de la LED 400 au noeud 404. Le transistor T1 est, de préférence, à canal P, et a par exemple sa source reliée, de préférence connectée, au noeud 402, et son drain relié, de préférence connecté, à l'anode de la LED 400. Le transistor T2 est, de préférence, à canal N, et a par exemple sa source reliée, de préférence connectée, au noeud 404, et son drain relié, de préférence connecté, à la cathode de la LED 400.

Le microcontrôleur 102 comprend un convertisseur numérique analogique 406 (bloc "DAC"). Le convertisseur 406 est configuré pour recevoir un code numérique C, et pour fournir une tension analogique Vref correspondant à ce code C. La tension Vref correspond à une fraction de la tension Vcc. Dit autrement, pour un code C donné, la tension Vref est égale à A fois la tension Vcc, avec A un facteur strictement inférieur à 1 et déterminé par le code C.

Le microcontrôleur 102 comprend, en outre, un comparateur 408. Une première entrée du comparateur 408 est reliée à une des bornes d'anode et de cathode de la LED 400 et une deuxième entrée du comparateur 408 est configurée pour recevoir la tension Vref. Le comparateur 408 est configuré pour fournir un signal de sortie OUT. Le signal OUT est un signal binaire. Un premier état binaire du signal OUT indique quand la tension sur la première entrée du comparateur 408 est supérieure à la tension Vref sur la deuxième entrée, un deuxième état binaire du signal OUT indiquant quand la tension sur la première entrée est inférieure à la tension Vref sur la deuxième entrée.

L'un des deux transistors T1 et T2 est commandé par le signal OUT.

L'autre des deux transistors T1 et T2 est commandé par un signal binaire ctrl fourni par le microcontrôleur 102. Le microcontrôleur 102 est configuré pour commander, via le signal ctrl, la mise à l'état passant de ce transistor pendant une phase d'émission d'impulsions lumineuses par la LED.

Plus particulièrement, dans le mode de réalisation illustré par la figure 4, la première entrée du comparateur 408 est reliée à l'anode de la LED 400, et la deuxième entrée du comparateur 408 reçoit la tension Vref. Dans ce mode de réalisation, le signal OUT commande le transistor T2 et le signal ctrl commande le transistor T1. La première entrée du comparateur 408 est alors l'entrée non inverseuse (+), et la deuxième entrée du comparateur 408 est l'entrée inverseuse (-), de manière que le comparateur 408 commande, via son signal de sortie OUT, une ouverture (mise à l'état bloqué) du transistor T2 lorsque la tension sur l'anode de la LED 400 devient inférieure à la tension Vref.

Selon un mode de réalisation, le transistor T1 ou T2 commandé par le signal OUT, à savoir le transistor T2 dans le mode de réalisation de la figure 4, appartient à une sortie 410 du microcontrôleur 102, par exemple une sortie trois états du microcontrôleur 102. Dit autrement, le transistor T2 appartient au microcontrôleur 102. Le transistor T2 est configuré pour forcer un niveau sur la sortie 410 lorsqu'il est mis à l'état passant, à savoir, dans ce mode de réalisation, pour tirer la sortie 410 à la tension Gnd du noeud 404. Le transistor T2 est alors connecté entre le noeud 404 et la sortie 410, et la cathode de la LED 400 est reliée, de préférence connectée, à la sortie 410.

Selon un mode de réalisation, le transistor T1 ou T2 commandé par le signal ctrl, à savoir le transistor T1 dans le mode de réalisation de la figure 4, appartient à une sortie 412 du microcontrôleur 102, par exemple une sortie trois états du microcontrôleur 102. Dit autrement, le transistor T1 appartient au microcontrôleur 102. Le transistor T1 est configuré pour forcer un niveau sur la sortie 412 lorsqu'il est mis à l'état passant, à savoir, dans ce mode de réalisation, pour tirer la sortie 412 à la tension Vcc du noeud 402. Le transistor T1 est alors connecté entre le noeud 402 et la sortie 412, et l'anode de la LED 400 est reliée, de préférence connectée, à la sortie 412.

La combinaison des deux modes de réalisation ci-dessus permet que seule la LED 400 soit disposée à l'extérieur du microcontrôleur 102, ce qui simplifie la carte 4 par rapport au cas où l'un et/ou l'autre des transistors T1 et T2 seraient disposés à l'extérieur du microcontrôleur 102. En effet, on tire ici profit du fait que les transistors T1 et T2 sont déjà présents dans les sorties 410 et 412 du microcontrôleur 102.

Toutefois, dans des variantes de réalisation non illustrées, l'un et/ou l'autre des transistors T1 et T2 peuvent être disposés à l'extérieur du microcontrôleur. Dans ce cas, le signal ctrl, respectivement OUT, de commande du transistor T1, respectivement T2, est fourni par une sortie correspondante du microcontrôleur 102.

En fonctionnement, lorsque les deux transistors T1 et T2 sont passants, un courant IL circule dans la LED 400. Si la tension sur l'anode de la LED 400 devient plus faible que la tension Vref, le signal OUT commute et entraine la mise à l'état bloqué du transistor T2. Le courant IL devient nul, ce qui entraîne que la tension d'anode de la LED 400 devient égale à Vcc et redevient donc supérieure à la tension Vref. Cela entraîne une nouvelle commutation du signal OUT, et donc la mise à l'état passant du transistor T2. Le courant IL dans la LED 400 augmente jusqu'à ce que la tension d'anode de la LED 400 redevienne inférieure la tension Vref. Ce fonctionnement se répète tant que le microcontrôleur maintient le transistor T1 passant, d'où il résulte que la LED 400 émet des impulsions lumineuses tant que le transistor T1 est passant.

Ainsi, pour une valeur de tension Vcc donnée, le choix de la tension Vref conditionne le courant IL maximum qui peut circuler dans la LED 400 avant que le signal OUT commute et entraîne l'ouverture du transistor qu'il commande, et que la LED 400 cesse d'émettre.

La fréquence des impulsions lumineuses émises par la LED 400 est en partie déterminée par le temps de réaction du comparateur 408. A titre d'exemple, cette fréquence est, en pratique, supérieure ou égale à 50 Hz, ce qui entraîne que l'émission de lumière par la LED 400 est perçue comme continue par un utilisateur.

Un exemple de choix de la tension Vref, donc du code C fourni au convertisseur 406, va maintenant être décrit en relation avec la figure 5.

La figure 5 illustre, par deux courbes 501 et 502, l'évolution de la tension d'anode VA de la LED 400 de la carte 4 de la figure 4, en fonction de la valeur de la tension Vcc.

Plus particulièrement, la courbe 501 illustre l'évolution de la tension VA lorsque la LED 400 se comporte comme une LED classique, c'est-à-dire quand la tension VLED à ses bornes et le courant IL qui la traverse suivent la courbe 300 de la figure 3, et la courbe 502 illustre l'évolution de la tension VA lorsque la LED 400 est remplacée par une résistance. Les deux courbes 501 et 502 sont obtenues alors que les transistors T1 et T2 sont maintenus passants, par exemple en appliquant la tension Vcc sur la grille du transistor T2, et la tension Gnd sur la grille du transistor T1.

La résistance utilisée pour obtenir la courbe 502 correspond en pratique à la résistance équivalente que présente la LED 400 lorsque la tension Vcc est à sa valeur maximale, par exemple 2,1 V, pour qu'un courant maximal Imax visé circule dans la LED 400, c'est-à-dire entre les noeuds 402 et 404 de la figure 4. La valeur maximale de la tension Vcc correspond, par exemple, à la valeur maximale que peut prendre la tension Vcc en raison de variation non désirées de la tension Vcc autour de sa valeur nominale.

Par exemple, pour une valeur maximale de la tension Vcc égale à 2,1 V, pour des résistances à l'état passant des transistors T1 et T2 égales chacune à 40 ohms (en négligeant les variations des résistances à l'état passant des transistors T1 et T2 avec la tension Vcc) et en visant un courant Imax dans la LED de l'ordre de 1 mA, c'est-à-dire un courant Imax se trouvant encore dans une zone de la courbe 300 (figure 3) où le courant dans la LED 400 augmente de manière sensiblement linéaire avec la tension aux bornes de la LED 400, et non pas de manière exponentielle, la résistance utilisée pour la courbe 502 est de l'ordre de 2 kilo ohms, par exemple égale à 2,02 kilo ohms, ce qui correspond, par exemple, d'après les spécifications du fournisseur de la LED, à la résistance équivalente de la LED à sa tension de seuil sous un courant de 1 mA.

Comme cela se voit sur la courbe 502 de la figure 5, lorsque la valeur de la tension Vcc augmente et que la LED 400 est remplacée par une résistance déterminée de la manière indiquée ci-dessus, la tension VA augmente de manière sensiblement proportionnelle avec la tension Vcc. Le fait que la courbe 502 ne soit pas exactement une droite provient des faibles variations des résistances à l'état passant des transistors T1 et T2 avec la tension Vcc.

Comme cela se voit en figure 5 à l'intérieur d'un cercle 504, lorsque la tension Vcc augmente, il y a une valeur de la tension Vcc à partir de laquelle la courbe 501 s'écarte de la courbe 502, la tension VA pour la courbe 501 devenant alors plus faible que la tension VA pour la courbe 502 pour une valeur donnée de la tension Vcc.

Le fait que la courbe 501 s'écarte de la courbe 502 indique que la LED 400 est alors équivalente à une résistance plus faible que la résistance utilisée pour le tracé de la courbe 502, donc que le courant circulant dans la LED 400 est plus élevée que celui circulant dans la résistance utilisée pour la courbe 502. Dit autrement, cela indique que la LED 400 est entrée dans une zone de sa caractéristique courant-tension où le courant qui la traverse augmente de manière exponentielle avec la tension aux bornes de la LED 400. Dit encore autrement, cela indique que la LED 400 est sortie de la zone de sa caractéristique courant-tension où le courant qui la traverse augmente de manière sensiblement linéaire avec la tension à ses bornes. C'est justement cette zone de fonctionnement exponentielle de la LED 400 que l'on cherche à éviter, de manière à conserver un courant relativement faible dans la LED 400, c'est-à-dire de manière à maîtriser la consommation de la LED 400.

Ainsi, en détectant avec le comparateur 408 (figure 4) lorsque la tension VA de l'anode de la LED 400 devient inférieure à la valeur qu'elle aurait eu si la LED 400 était remplacée par la résistance utilisée pour le tracé de la courbe 502, et en ouvrant le transistor T2 lorsque c'est le cas, on empêche la LED 400 d'atteindre sa zone de fonctionnement exponentielle.

Dans l'exemple de la figure 5, la courbe 501 s'éloigne de la courbe 502 à partir d'une tension Vcc égale à 2,15 V, la tension VA de la courbe 504 étant alors égale à 2,06 V, c'est-à-dire à 2,06/2,15*Vcc ou 0,95 Vcc. Ainsi, le code C fourni au convertisseur 406 (figure 4) est tel que le convertisseur 406 fournit la tension Vref égale à 0,95 Vcc. Il en résulte que, lorsque la tension Vcc varie, la tension Vref varie également et suit sensiblement la courbe 502.

En résumé, pour déterminer le code C, on détermine la valeur de la résistance que devrait avoir la LED 400 pour que le courant Imax traverse la LED 400 lorsque la tension Vcc est à sa valeur maximale. On trace l'évolution, en fonction de la valeur Vcc, de la tension d'anode de la LED 400 en utilisant la LED 400 pour une première courbe et la résistance déterminée précédemment pour une deuxième courbe. On détermine le ratio entre la tension Vcc et la tension VA de la deuxième courbe lorsque la première courbe s'éloigne de la deuxième courbe. On détermine le code C de manière que le convertisseur 406 fournisse la tension Vref égale à la tension Vcc multipliée par le ratio déterminé, ou légèrement inférieure, par exemple de 1%, à la tension Vcc multipliée par le ratio déterminé pour tenir compte du temps de propagation dans le comparateur 408.

Dit autrement, on détermine la valeur de la résistance que devrait avoir la LED 400 pour que le courant Imax traverse la LED 400 lorsque la tension Vcc est à sa valeur maximale, on détermine une première valeur de la tension sur le noeud 412, et on détermine le code C de manière que la tension Vref, lorsque la tension Vcc est à sa valeur maximale, soit égale à cette première valeur, voire à une valeur légèrement inférieure, par exemple de 1%, à cette première valeur pour tenir compte du temps de propagation dans le comparateur 408.

Dit encore autrement, on détermine Vref, donc le code C, de sorte que le courant dans la LED 400 reste inférieur au courant Imax, même lorsque la tension Vcc n'est pas à sa valeur nominale, mais à sa valeur maximale, éventuellement en tenant compte du temps de commutation du comparateur 408.

On a décrit ci-dessus un cas où la courbe 502 est déterminée en remplaçant la LED 400 par une résistance équivalente, de manière à détecter lorsque la courbe 501 s'éloigne de la courbe 502. Il est également possible d'obtenir la courbe 502, ou du moins une approximation de celle-ci, en traçant la courbe 501, puis en utilisant comme courbe 502 la tangente à la courbe 501 dans la partie de la courbe 501 qui varie de manière linéaire avec la tension Vcc.

Plus généralement, la personne du métier est en mesure de déterminer la tension Vref, donc le code C, pour que le courant dans la LED 400 reste inférieur à un courant Imax, même lorsque la tension Vcc s'éloigne de sa valeur nominale et atteint sa valeur maximale.

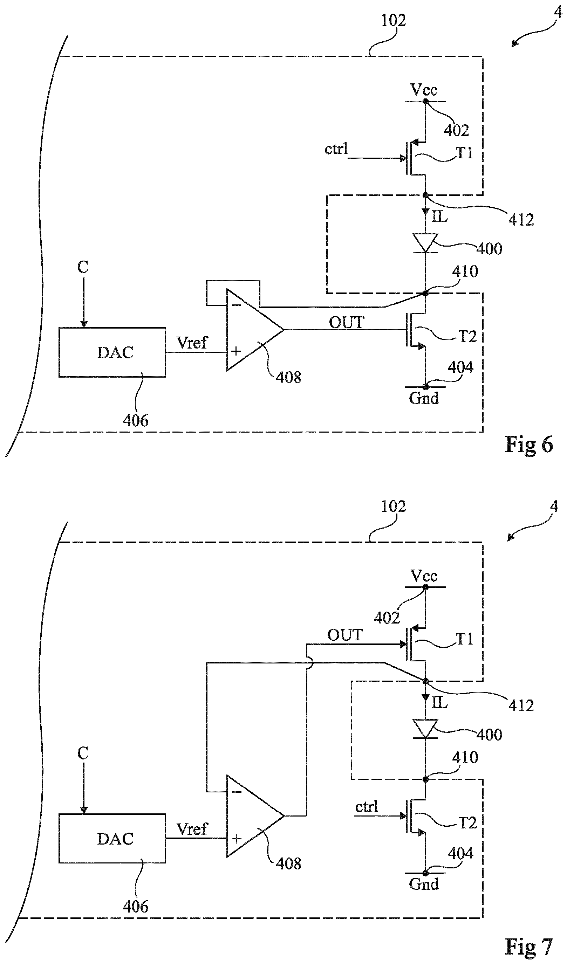

La figure 6 représente, de manière schématique, une variante de réalisation de la carte 4 de la figure 4, seules les différences entre la carte 4 de la figure 4 et celle de la figure 6 étant ici mises en exergue.

La carte 4 de la figure 6 diffère de celle de la figure 4 en ce que l'une des entrées du comparateur 408 est ici reliée à la cathode de la LED 400, et non pas à l'anode de cette dernière comme c'est le cas en figure 4.

Plus particulièrement, dans cet exemple où le signal OUT de sortie du comparateur 408 commande le transistor T2, l'entrée inverseuse du comparateur 408 est reliée, de préférence connectée, à la cathode de la LED 400, et l'entrée non inverseuse du comparateur 408 reçoit la tension Vref.

En effet, on a décrit ci-dessus, en relation avec les figures 4 et 5, un mode de réalisation dans lequel l'une des entrées du comparateur 408 est reliée à l'anode de la LED 400. De manière similaire à ce qu'on vient de décrire, il est possible de limiter le courant IL dans la LED 400, même si la tension Vcc varie, en comparant la tension de cathode de la LED 400 à la tension de cathode qu'aurait eu la LED 400 si elle avait été remplacée par la résistance précédemment mentionnée.

Ainsi, en déterminant, pour une valeur maximale de la tension Vcc, la valeur de la résistance équivalente que la LED 400 devrait avoir pour que le courant Imax circule dans la LED 400 lorsque la tension Vcc est à sa valeur maximale, puis en traçant l'évolution, en fonction de la tension Vcc, de la tension de cathode de la LED 400 et de la tension de cathode de la LED 400 remplacée par cette résistance, on constate que, à partir d'une valeur de la tension Vcc, la courbe de la tension de cathode de la LED 400 s'éloigne de la courbe de la tension de cathode de la LED 400 remplacée par la résistance, en devenant supérieure à cette dernière. On peut alors déterminer le ratio entre cette valeur de la tension Vcc et la valeur de la tension de cathode de la LED 400 remplacée par la résistance, et donc en déduire le code C à fournir au convertisseur 406. Bien entendu, ce code C sera alors différent du code C obtenu pour le mode de réalisation de la figure 4.

De manière similaire à ce qui a été indiqué en relation avec la figure 5, la personne du métier est en mesure de déterminer la tension Vref, donc le code C, pour que le courant dans la LED 400 reste inférieur au courant Imax, même lorsque la tension Vcc s'éloigne de sa valeur nominale et atteint sa valeur maximale. Comme précédemment, la personne du métier est en mesure de déterminer cette tension Vref, et donc le code C, de préférence en tenant compte du temps de basculement du comparateur 408.

En fonctionnement, lorsque la tension de cathode de la LED 400 devient supérieure à la tension Vref, le signal OUT commute et entraîne la mise à l'état bloqué du transistor T2. Dit autrement, à la différence de la figure 4 où le comparateur 408 est configuré pour ouvrir le transistor T2 lorsque la tension d'anode de la LED devient inférieure à la tension Vref, le comparateur 408 de la figure 6 est ici configuré pour ouvrir le transistor T2 lorsque la tension de cathode de la LED 400 devient supérieure à la tension Vref.

La figure 7 illustre une autre variante de réalisation de la carte 4 de la figure 4, seules les différences entre la carte 4 de la figure 4 et celle de la figure 7 étant ici mises en exergue.

La carte 4 de la figure 7 diffère de celle de la figure 4 en ce que le comparateur 408 commande le transistor T1 et non pas le transistor T2 comme c'était le cas en figure 4. En outre, dans cette variante de réalisation le transistor T2 est commandé par le signal ctrl fourni par le microcontrôleur 102.

Plus exactement, de manière similaire à ce qui a été indiqué en relation avec la figure 4, le comparateur 408 est configuré pour ouvrir le transistor T1 ou T2 qu'il commande, à savoir le transistor T1 en figure 7, via son signal de sortie OUT, lorsque la tension d'anode de la LED 400 devient inférieure à la tension Vref. A titre d'exemple, lorsque le transistor T1 est un transistor à canal P, l'entrée inverseuse (-) du comparateur 408 reçoit la tension d'anode de la LED 400 et l'entrée non inverseuse (+) du comparateur 408 reçoit la tension Vref. Par ailleurs, le microcontrôleur 102 est configuré pour maintenir le transistor T2 fermé pendant une phase d'émission d'impulsions lumineuses par la LED 400.

Le code C fourni au convertisseur 406, et donc la tension Vref, ou, dit autrement, le ratio entre la tension Vcc et la tension Vref, sont déterminés de la façon décrite en relation avec les figures 4 et 5. Notamment, le code C fourni au convertisseur 406 de la figure 7 est identique à celui fournit au convertisseur 406 de la figure 4.

Le fonctionnement du transistor T1, respectivement T2, de la carte 4 de la figure 7 est identique à celui du transistor T2, respectivement T1, de la carte 4 de la figure 4.

Dans encore une autre variante de réalisation, non illustrée et correspondant à la combinaison des variantes de réalisation de la figure 6 et de la figure 7, le transistor T2 est commandé par le signal ctrl du microcontrôleur 102, le transistor T1 est commandé par le signal OUT de sortie du comparateur 406, et le comparateur 406 a une entrée, de préférence inverseuse, reliée, par exemple connectée, à la cathode de la LED 400, et une autre entrée, de préférence non inverseuse, recevant la tension Vref. Dans cette autre variante, le code C, ou, dit autrement la tension Vref ou le ratio entre la tension Vref et la tension Vcc, sont déterminés de la manière décrite en relation avec la figure 6. Par exemple, le code C fourni au convertisseur 406 de cette variante de réalisation sera identique à celui fourni au convertisseur 406 du mode de réalisation de la figure 6. En outre, le comparateur 408 est alors configuré pour ouvrir l'interrupteur T2 lorsque la tension de cathode de la LED 400 devient supérieure à la tension Vref.

Bien que dans la figure 4, la figure 6 et la figure 7, la carte 4 n'est que partiellement représentée, le microcontrôleur 102 de la carte 4 peut, comme celui de la carte 1 de la figure 1, faire partie du circuit 100, et la carte 4 peut comprendre, comme la carte 1 de la figure 1, le capteur 104. Lorsque la carte 4 comprend le capteur 104, celui-ci est reliée au circuit 100, et plus particulièrement à son microcontrôleur 102, par exemple directement avec des conducteurs électriques, ou via l'intermédiaire d'un microcontrôleur supplémentaire relié à la fois au microcontrôleur 102 et au capteur 104.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, la détermination du code C, ou, dit autrement, de la tension Vref ou du ratio entre la tension Vcc et la tension Vref, est à la portée de la personne du métier à partir des indications fonctionnelles données ci-dessus.

## Revendications

1. Carte à microcircuit (4) comprenant :
une diode électroluminescente (400) ayant une borne d'anode reliée à un noeud (402) d'application d'une tension d'alimentation (Vcc) par un premier transistor (T1), et une borne de cathode reliée à un noeud (404) d'application d'une tension de référence (Gnd) par un deuxième transistor (T2) ; et
un microcontrôleur (102), **caractérisée en ce que** le microcontrôleur comprend un convertisseur numérique-analogique (406) et un comparateur (408) ayant une première entrée reliée à une des bornes d'anode et de cathode de la diode (400) et une deuxième entrée configurée pour recevoir une tension de sortie (Vref) du convertisseur (406), et **en ce qu'** un signal de sortie (OUT) du comparateur (408) commande l'un des premier et deuxième transistors (T1, T2) pour couper l'alimentation de la diode électroluminescente lorsqu'un courant qui y circule atteint un courant maximal désiré dans ladite diode électroluminescente.

2. Carte à microcircuit selon la revendication 1, dans laquelle la première entrée du comparateur (408) est reliée à la borne d'anode de la diode (400), le comparateur (408) étant configuré pour ouvrir ledit un des premier et deuxième transistors (T1, T2) lorsqu'une tension d'anode de la diode (400) est inférieure à la tension de sortie (Vref) du convertisseur (406).

3. Carte à microcircuit selon la revendication 1, dans laquelle la première entrée du comparateur (408) est reliée à la borne de cathode de la diode (400), le comparateur (408) étant configuré pour ouvrir ledit un des premier et deuxième transistors (T1, T2) lorsqu'une tension de cathode de la diode est supérieure à la tension de sortie (Vref) du convertisseur (406).

4. Carte à microcircuit selon l'une quelconque des revendications 1 à 3, dans laquelle le microcontrôleur (102) est configuré pour commander l'autre desdits premier et deuxième transistors (T1, T2).

5. Carte à microcircuit selon la revendication 4, dans laquelle le microcontrôleur (102) est configuré pour mettre l'autre desdits premier et deuxième transistors (T1, T2) à l'état passant pendant une phase d'émission d'impulsions lumineuses par la diode (400).

6. Carte à microcircuit selon l'une quelconque des revendications 1 à 5, dans laquelle ledit un des premier et deuxième transistors (T1, T2) appartient à une sortie (410, 412) du microcontrôleur (102), par exemple de type sortie trois états.

7. Carte à microcircuit selon la revendication 6, dans laquelle :
le signal de sortie (OUT) du comparateur (408) commande le premier transistor (T1), l'état passant du premier transistor (T1) étant configuré pour tirer ladite sortie (412) à la tension (Vcc) du premier noeud (402), ou
le signal de sortie (OUT) du comparateur (408) commande le deuxième transistor (T2), l'état passant du deuxième transistor (T2) étant configuré pour tirer ladite sortie (410) à la tension (Gnd) du deuxième noeud (404).

8. Carte à microcircuit selon la revendication 7, dans laquelle l'autre des premier et deuxième transistors (T1, T2) appartient à une autre sortie (410, 412) du microcontrôleur (102), par exemple de type sortie trois états.

9. Carte à microcircuit selon la revendication 8, dans laquelle :
le signal de sortie (OUT) du comparateur (408) commande le premier transistor (T1), l'état passant du premier transistor (T1) étant configuré pour tirer ladite sortie (412) à la tension (Vcc) du premier noeud (402) et l'état passant du deuxième transistor (T2) étant configuré pour tirer ladite autre sortie (412) à la tension (Gnd) du deuxième noeud (404), ou
le signal de sortie (OUT) du comparateur (408) commande le deuxième transistor (T2), l'état passant du deuxième transistor (T2) étant configuré pour tirer ladite sortie (410) à la tension (Gnd) du deuxième noeud (404) et l'état passant du premier transistor (T1) étant configuré pour tirer ladite autre sortie (412) à la tension (Vcc) du premier noeud (402).

10. Carte à microcircuit selon l'une quelconque des revendications 1 à 9, comprenant en outre un capteur biométrique (104) relié au microcontrôleur (102).

11. Carte à microcircuit selon la revendication 10, dans laquelle le capteur biométrique (102) est un capteur d'empreinte digitale.

## Patentansprüche

1. Smartcard (4), die Folgendes aufweist:
eine Leuchtdiode (400) mit einem Anodenanschluss, der über einen ersten Transistor (T1) mit einem Knoten (402) zum Anlegen einer Versorgungsspannung (Vcc) verbunden ist, und einem Kathodenanschluss, der über einen zweiten Transistor (T2) mit einem Knoten (404) zum Anlegen einer Referenzspannung (Gnd) verbunden ist; und
einen Mikrocontroller (102), **dadurch gekennzeichnet, dass** der Mikrocontroller einen Digital-Analog-Wandler (406) und einen Komparator (408) mit einem ersten Eingang, der mit einem der Anoden- und Kathodenanschlüsse der Diode (400) gekoppelt ist, und einem zweiten Eingang, der zum Empfangen einer Ausgangsspannung (Vref) des Wandlers (406) konfiguriert ist, aufweist und dass ein Ausgangssignal (OUT) des Komparators (408) einen der ersten und zweiten Transistoren (T1, T2) steuert, um die Versorgung der lichtemittierenden Diode auszuschalten, wenn ein darin fließender Strom einen maximalen Zielstrom in der lichtemittierenden Diode erreicht.

2. Smartcard nach Anspruch 1, wobei der erste Eingang des Komparators (408) mit dem Anodenanschluss der Diode (400) gekoppelt ist, wobei der Komparator (408) so konfiguriert ist, dass er den einen der ersten und zweiten Transistoren (T1, T2) ausschaltet, wenn eine Anodenspannung der Diode (400) kleiner ist als die Ausgangsspannung (Vref) des Wandlers (406).

3. Smartcard nach Anspruch 1, wobei der erste Eingang des Komparators (408) mit dem Kathodenanschluss der Diode (400) gekoppelt ist, wobei der Komparator (408) so konfiguriert ist, dass er den einen der ersten und zweiten Transistoren (T1, T2) ausschaltet, wenn eine Kathodenspannung der Diode größer ist als die Ausgangsspannung (Vref) des Wandlers (406).

4. Smartcard nach einem der Ansprüche 1 bis 3, wobei der Mikrocontroller (102) so konfiguriert ist, dass er den anderen der ersten und zweiten Transistoren (T1, T2) steuert.

5. Smartcard nach Anspruch 4, wobei der Mikrocontroller (102) so konfiguriert ist, dass er den anderen der ersten und zweiten Transistoren (T1, T2) während einer Phase der Emission von Lichtimpulsen durch die Diode (400) in den eingeschalteten Zustand versetzt.

6. Smartcard nach einem der Ansprüche 1 bis 5, wobei der eine der ersten und zweiten Transistoren (T1, T2) zu einem Ausgang (410, 412) des Mikrocontrollers (102) gehört, zum Beispiel vom Typ mit drei Ausgangszuständen.

7. Smartcard nach Anspruch 6, wobei:
das Ausgangssignal (OUT) des Komparators (408) den ersten Transistor (T1) steuert, wobei der Ein-Zustand des ersten Transistors (T1) so konfiguriert ist, dass er den Ausgang (412) auf die Spannung (Vcc) des ersten Knotens (402) zieht, oder
das Ausgangssignal (OUT) des Komparators (408) den zweiten Transistor (T2) steuert, wobei der Ein-Zustand des zweiten Transistors (T2) so konfiguriert ist, dass er den Ausgang (410) auf die Spannung (Gnd) des zweiten Knotens (404) zieht.

8. Smartcard nach Anspruch 7, wobei der andere der ersten und zweiten Transistoren (T1, T2) zu einem anderen Ausgang (410, 412) des Mikrocontrollers (102) gehört, beispielsweise vom Typ mit drei Ausgangszuständen.

9. Smartcard nach Anspruch 8, wobei:
das Ausgangssignal (OUT) des Komparators (408) den ersten Transistor (T1) steuert, wobei der Ein-Zustand des ersten Transistors (T1) so konfiguriert ist, dass er den Ausgang (412) auf die Spannung (Vcc) des ersten Knotens (402) zieht und der Ein-Zustand des zweiten Transistors (T2) so konfiguriert ist, dass er den anderen Ausgang (412) auf die Spannung (GND) des zweiten Knotens (404) zieht, oder
das Ausgangssignal (OUT) des Komparators (408) den zweiten Transistor (T2) steuert, wobei der Ein-Zustand des zweiten Transistors (T2) so konfiguriert ist, dass er den Ausgang (410) auf die Spannung (Gnd) des zweiten Knotens (404) zieht und der Ein-Zustand des ersten Transistors (T1) so konfiguriert ist, dass er den anderen Ausgang (412) auf die Spannung (Vcc) des ersten Knotens (402) zieht.

10. Smartcard nach einem der Ansprüche 1 bis 9, ferner aufweisend einen biometrischen Sensor (104), der mit dem Mikrocontroller (102) verbunden ist.

11. Smartcard nach Anspruch 10, wobei der biometrische Sensor (102) ein Fingerabdrucksensor ist.

## Claims

1. Smart card (4) comprising:
a light-emitting diode (400) having an anode terminal coupled to a node (402) of application of a power supply voltage (Vcc) by a first transistor (T1), and a cathode terminal coupled to a node (404) of application of a reference voltage (Gnd) by a second transistor (T2); and
a microcontroller (102), **characterized in that** the microcontroller comprises a digital-to-analog converter (406) and a comparator (408) having a first input coupled to one of the anode and cathode terminals of the diode (400) and a second input configured to receive an output voltage (Vref) of the converter (406), and **in that** an output signal (OUT) of the comparator (408) controls one of the first and second transistors (T1, T2) for turning off the supply of the light-emitting diode when a current flowing therein reaches a maximal targeted current in said light-emitting diode.

2. Smart card according to claim 1, wherein the first input of the comparator (408) is coupled to the anode terminal of the diode (400), the comparator (408) being configured to turn off said one of the first and second transistors (T1, T2) when an anode voltage of the diode (400) is smaller than the output voltage (Vref) of the converter (406) .

3. Smart card according to claim 1, wherein the first input of the comparator (408) is coupled to the cathode terminal of the diode (400), the comparator (408) being configured to turn off said one of the first and second transistors (T1, T2) when a cathode voltage of the diode is greater than the output voltage (Vref) of the converter (406).

4. Smart card according to any of claims 1 to 3, wherein the microcontroller (102) is configured to control the other one of said first and second transistors (T1, T2).

5. Smart card according to claim 4, wherein the microcontroller (102) is configured to set the other one of said first and second transistors (T1, T2) to the on state during a phase of emission of light pulses by the diode (400).

6. Smart card according to any of claims 1 to 5, wherein said one of the first and second transistors (T1, T2) belongs to an output (410, 412) of the microcontroller (102), for example, of three-state output type.

7. Smart card according to claim 6, wherein:
the output signal (OUT) of the comparator (408) controls the first transistor (T1), the on state of the first transistor (T1) being configured to pull said output (412) to the voltage (Vcc) of the first node (402), or the output signal (OUT) of the comparator (408) controls the second transistor (T2), the on state of the second transistor (T2) being configured to pull said output (410) to the voltage (Gnd) of the second node (404).

8. Smart card according to claim 7, wherein the other one of the first and second transistors (T1, T2) belongs to another output (410, 412) of the microcontroller (102), for example, of three-state output type.

9. Smart card according to claim 8, wherein:
the output signal (OUT) of the comparator (408) controls the first transistor (T1), the on state of the first transistor (T1) being configured to pull said output (412) to the voltage (Vcc) of the first node (402) and the on state of the second transistor (T2) being configured to pull said other output (412) to the voltage (GND) of the second node (404), or
the output signal (OUT) of the comparator (408) controls the second transistor (T2), the on state of the second transistor (T2) being configured to pull said output (410) to the voltage (Gnd) of the second node (404) and the on state of the first transistor (T1) being configured to pull said other output (412) to the voltage (Vcc) of the first node (402).

10. Smart card according to any of claims 1 to 9, further comprising a biometric sensor (104) coupled to the microcontroller (102).

11. Smart card according to claim 10, wherein the biometric sensor (102) is a fingerprint sensor.
